# EUROPEAN PATENT SPECIFICATION

(11) **EP 4 517 681 B1**
(45) Date of publication and mention of the grant of the patent: **04.03.2026**
(21) Application number: 24198493.9
(22) Date of filing: 04.09.2024
(51) Int. Cl.: G06V 10/44, E21B 47/002, G06V 10/50, G06V 30/413

(54) **DETECTING A SCALE TYPE OF WELL-LOG PROPERTIES IN RASTER IMAGES**
DETEKTION EINES SKALENTYPS VON BOHRLOCHEIGENSCHAFTEN IN RASTERBILDERN
DÉTECTION D'UN TYPE D'ÉCHELLE DE PROPRIÉTÉS DE DIAGRAPHIE DE PUITS DANS DES IMAGES TRAMÉES

(30) Priority: 04.09.2023 IN 202311059405
(43) Date of publication of application: 05.03.2025
(73) Proprietor: Services Pétroliers Schlumberger, 75007 Paris (FR); GeoQuest Systems B.V., 2514 JG The Hague (NL)
(72) Inventor: LOKHANDE, Avinash, 411006 Pune (IN); GUNE, Omkar Anil, 411006 Pune (IN)
(74) Representative: Schlumberger Intellectual Property Department

(56) References cited:
- US-A1- 2018 253 873
- US-A1- 2023 128 933

## Description

### Background

A downhole tool may capture well-log data in a wellbore. The well-log data may include resistivity, porosity, density, sonic, gamma ray, etc. Some of the well-log data may be in the form of raster images. A raster image represents a two-dimensional picture as a rectangular matrix or grid of square pixels, viewable via a computer display, paper, or other display medium. In raster images, different well-log properties are recorded on different scale types (e.g., linear or log). Toward the end of raster digitization, the scale type of each well-log property may be detected.

The scale type may be detected by using information from two sources: 1) well-log property range values in the log header, and 2) a grid pattern in the plot segment. However, both sources of information pose challenges in terms of automatic detection of the scale type. More particularly, scale type detection using range values in the log headers involves robust output from optical character recognition (OCR) given that the start and end values are located accurately. Any failure in locating start or end values and/or failure in the OCR (e.g., due to a noisy raster) can result in an incorrect detection of scale type. In addition, the grid type detection can be addressed as a classification problem using a supervised artificial intelligence (AI)/ machine-learning (ML)-based technique. However, such methods involve supervision in terms of labeling and/or training data generation. Labeled training data generation is a time-consuming task. Moreover, such a task may not generalize in identifying diverse types of grid patterns which are not included in training. Acknowledged is US 2018/253873 A1 (WITTE DEAN [US] ET AL) 6 September 2018 (2018-09-06).

### Summary

A method for processing an image of a subterranean formation is disclosed. The method includes performing edge detection on the image to produce a first processed image. The method also includes performing gridlines localizer on the first processed image to produce a second processed image. The method also includes performing noise filtering on the second processed image to produce a third processed image. The method also includes performing pattern recognition on the third processed image to determine that the image that corresponds to the third processed image is linear scale type or logarithmic scale type.

A computing system is also disclosed. The system includes one or more processors and a memory system. The memory includes one or more non-transitory computer-readable media storing instructions that, when executed by at least one of the one or more processors, cause the computing system to perform operations. The operations include receiving a plurality of images. The images include 2D plot segment images of a subterranean formation. The operations also include performing edge detection on the images to produce a plurality of first processed images. Performing edge detection includes detecting edge pixels in each of the images. The edge pixels correspond to gridlines and curves in the images. The operations also include performing gridlines localizer on the first processed images to produce a plurality of second processed images. Performing the gridlines localizer includes determining a sum of the edge pixels in each column of the first processed images, identifying the columns having sums that exceed a threshold, and determining that the identified columns comprise peaks. The operations also include performing noise filtering on the second processed images to produce a plurality of third processed images. The operations also include performing pattern recognition on the third processed images. Performing the pattern recognition includes fitting a straight line through the peaks in the third processed images, determining distances between the peaks and the straight line, and determining that the received images that correspond to the third processed images are linear scale type or log scale type based upon the distances between the peaks and the straight line. The images are determined to be linear scale type based upon an average of the distances between the peaks and the straight line being less than a second predetermined distance threshold. The images are determined to be logarithmic scale type based upon an average of the distances between the peaks and the straight line being greater than the second predetermined distance threshold.

A computer program is also disclosed. The computer program includes instructions that, when executed by a computer processor of a computing device, causes the computing device to perform operations. The operations include receiving a plurality of images. The images include 2D plot segment images of a subterranean formation. The operations also include performing edge detection on the images to produce a plurality of first processed images. Performing edge detection includes detecting edge pixels in each of the images. The edge pixels correspond to gridlines, curves, or both. The first processed images are binary images. The binary images include the edge pixels and a background. The operations also include performing gridlines localizer on the first processed images to produce a plurality of second processed images. Performing the gridlines localizer includes determining a sum of the edge pixels in each column of the first processed images. Performing the gridlines localizer also includes identifying a first portion of the columns having sums that exceed a global threshold. The global threshold is a first predetermined fraction of a maximum of all of the sums. Performing the gridlines localizer also includes identifying a second portion of the columns having sums that exceed a local threshold. The local threshold is a second predetermined fraction of a maximum of the sums corresponding to a subset of the columns that are spatially consecutive. The subset is one of a plurality of subsets that are non-overlapping. Performing the gridlines localizer also includes determining that the first and second portions of the columns represent peaks. The operations also include performing noise filtering on the second processed images to produce a plurality of third processed images. Performing the noise filtering includes determining distances between the peaks. Determining the distances includes determining first distances between each pair of consecutive peaks and determining second distances between each pair of alternating peaks. Performing the noise filtering also includes identifying one or more of the peaks as outliers based upon the distances. The one or more peaks are identified as outliers based upon one or more of the distances being greater than a first predetermined distance threshold. Performing the noise filtering also includes removing the one or more peaks that are identified as the outliers to produce the plurality of third processed images. The operations also include performing pattern recognition on the third processed images. Performing the pattern recognition includes fitting a straight line through the peaks in the third processed images, determining distances between the peaks and the straight line, and determining that the received images that correspond to the third processed images are linear scale type or logarithmic scale type based upon the distances between the peaks and the straight line. The images are determined to be linear scale type based upon an average of the distances between the peaks and the straight line being less than a second predetermined distance threshold. The images are determined to be logarithmic scale type based upon an average of the distances between the peaks and the straight line being greater than the second predetermined distance threshold. The operations also include rescaling the received images to produce a plurality of rescaled images. The received images are rescaled based upon the received images being determined to be linear scale type or logarithmic scale type. The operations also include displaying the rescaled images.

This summary is provided to introduce a selection of concepts that are further described below in the detailed description. This summary is not intended to identify key or essential features of the claimed subject matter, nor is it intended to be used as an aid in limiting the scope of the claimed subject matter.

### Brief Description of the Drawings

The accompanying drawings, which are incorporated in and constitute a part of this specification, illustrate embodiments of the present teachings and together with the description, serve to explain the principles of the present teachings. In the figures:
Figures 1A, 1B, 1C, 1D, 2, 3A, and 3B illustrate simplified, schematic views of an oilfield and its operation, according to an embodiment.
Figure 4A illustrates detection of a linear scale using range values (e.g., in the boxes) in a log header of a well-log, according to an embodiment.
Figure 4B illustrates detection of a linear scale using a grid pattern from a plot segment, according to an embodiment.
Figure 5A illustrates detection of a logarithmic scale using range values (e.g., in the boxes) in a log header of a well-log, according to an embodiment.
Figure 5B illustrates detection of a logarithmic scale using a grid pattern from a plot segment, according to an embodiment.
Figure 6 illustrates a flowchart of a method for automatically detecting a scale type of a well-log property (e.g., using edge detection, gridlines localizer, noise filter(s), and pattern recognition), according to an embodiment.
Figure 7 illustrates a schematic view of the method in Figure 6, according to an embodiment.
Figure 8A illustrates a plot segment of a well-log that uses a linear scale, according to an embodiment.
Figure 8B illustrates a gridlines localizer determining a sum of the edge pixels in each column of the plot segment of Figure 8A, according to an embodiment.
Figure 8C illustrates the gridlines localizer identifying the columns in Figure 8B where the sum is greater than a (e.g., global and/or local) threshold, according to an embodiment.
Figure 9A illustrates a plot segment of a well-log that uses a logarithmic scale, according to an embodiment.
Figure 9B illustrates a gridlines localizer determining a sum of the edge pixels in each column of the plot segment of Figure 9A, according to an embodiment.
Figure 9C illustrates the gridlines localizer identifying the columns in Figure 9B where the sum is greater than a (e.g., global and/or local) threshold, according to an embodiment.
Figures 10A and 10B illustrate noise filters identifying the peaks of the columns from a linear scale well-log that are noisy/outliers and the peaks of the columns that are noise-free/inliers, according to an embodiment.
Figures 11A and 11B illustrate noise filters identifying the peaks of the columns from a logarithmic scale well-log that are noisy/outliers and the peaks of the columns that are noise-free/inliers, according to an embodiment.
Figure 12 illustrates a pattern recognition being performed on a linear scale well-log after the noise filters remove the noisy/outlier peaks, according to an embodiment.
Figure 13 illustrates a pattern recognition being performed on a logarithmic scale well-log after the noise filters remove the noisy/outlier peaks, according to an embodiment.
Figure 14 illustrates a computing system for performing at least a portion of the method(s) disclosed herein, according to an embodiment.

### Detailed Description

Reference will now be made in detail to embodiments, examples of which are illustrated in the accompanying drawings and figures. In the following detailed description, numerous specific details are set forth in order to provide a thorough understanding of the invention. However, it will be apparent to one of ordinary skill in the art that the invention may be practiced without these specific details. In other instances, well-known methods, procedures, components, circuits and networks have not been described in detail so as not to unnecessarily obscure aspects of the embodiments.

It will also be understood that, although the terms first, second, etc. may be used herein to describe various elements, these elements should not be limited by these terms. These terms are only used to distinguish one element from another. For example, a first object could be termed a second object, and, similarly, a second object could be termed a first object, without departing from the scope of the invention. The first object and the second object are both objects, respectively, but they are not to be considered the same object.

The terminology used in the description of the invention herein is for the purpose of describing particular embodiments only and is not intended to be limiting of the invention. As used in the description of the invention and the appended claims, the singular forms "a," "an" and "the" are intended to include the plural forms as well, unless the context clearly indicates otherwise. It will also be understood that the term "and/or" as used herein refers to and encompasses any possible combinations of one or more of the associated listed items. It will be further understood that the terms "includes," "including," "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Further, as used herein, the term "if" may be construed to mean "when" or "upon" or "in response to determining" or "in response to detecting," depending on the context.

Attention is now directed to processing procedures, methods, techniques and workflows that are in accordance with some embodiments. Some operations in the processing procedures, methods, techniques and workflows disclosed herein may be combined and/or the order of some operations may be changed.

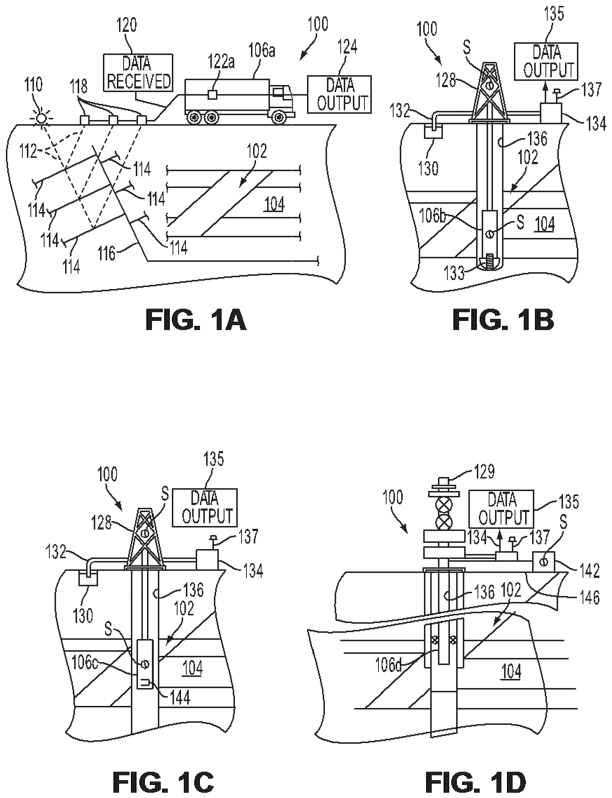

Figures 1A-1D illustrate simplified, schematic views of oilfield 100 having subterranean formation 102 containing reservoir 104 therein in accordance with implementations of various technologies and techniques described herein. Although embodiments of the present method are at least partially described herein with reference to an oilfield, it will be appreciated that this is merely an illustrative example. Embodiments of the present method may be employed in any application in which visualizing, modeling, or otherwise identifying subsurface features (e.g., geological features) may be useful. Examples outside of the oilfield context include subsurface mapping for wind arrays and/or solar arrays, geothermal energy production, mining operations, offshore/deep ocean applications, etc.

Figure 1A illustrates a survey operation being performed by a survey tool, such as seismic truck 106.1, to measure properties of the subterranean formation. The survey operation is a seismic survey operation for producing sound vibrations. In Figure 1A, one such sound vibration, e.g., sound vibration 112 generated by source 110, reflects off horizons 114 in earth formation 116. A set of sound vibrations is received by sensors, such as geophone-receivers 118, situated on the earth's surface. The data received 120 is provided as input data to a computer 122.1 of a seismic truck 106.1, and responsive to the input data, computer 122.1 generates seismic data output 124. This seismic data output may be stored, transmitted or further processed as desired, for example, by data reduction.

Figure 1B illustrates a drilling operation being performed by drilling tools 106.2 suspended by rig 128 and advanced into subterranean formations 102 to form wellbore 136. Mud pit 130 is used to draw drilling mud into the drilling tools via flow line 132 for circulating drilling mud down through the drilling tools, then up wellbore 136 and back to the surface. The drilling mud is typically filtered and returned to the mud pit. A circulating system may be used for storing, controlling, or filtering the flowing drilling mud. The drilling tools are advanced into subterranean formations 102 to reach reservoir 104. Each well may target one or more reservoirs. The drilling tools are adapted for measuring downhole properties using logging while drilling tools. The logging while drilling tools may also be adapted for taking core sample 133 as shown.

Computer facilities may be positioned at various locations about the oilfield 100 (e.g., the surface unit 134) and/or at remote locations. Surface unit 134 may be used to communicate with the drilling tools and/or offsite operations, as well as with other surface or downhole sensors. Surface unit 134 is capable of communicating with the drilling tools to send commands to the drilling tools, and to receive data therefrom. Surface unit 134 may also collect data generated during the drilling operation and produce data output 135, which may then be stored or transmitted.

Sensors (S), such as gauges, may be positioned about oilfield 100 to collect data relating to various oilfield operations as described previously. As shown, sensor (S) is positioned in one or more locations in the drilling tools and/or at rig 128 to measure drilling parameters, such as weight on bit, torque on bit, pressures, temperatures, flow rates, compositions, rotary speed, and/or other parameters of the field operation. Sensors (S) may also be positioned in one or more locations in the circulating system.

Drilling tools 106.2 may include a bottom hole assembly (BHA) (not shown), generally referenced, near the drill bit (e.g., within several drill collar lengths from the drill bit). The bottom hole assembly includes capabilities for measuring, processing, and storing information, as well as communicating with surface unit 134. The bottom hole assembly further includes drill collars for performing various other measurement functions.

The bottom hole assembly may include a communication subassembly that communicates with surface unit 134. The communication subassembly is adapted to send signals to and receive signals from the surface using a communications channel such as mud pulse telemetry, electro-magnetic telemetry, or wired drill pipe communications. The communication subassembly may include, for example, a transmitter that generates a signal, such as an acoustic or electromagnetic signal, which is representative of the measured drilling parameters. It will be appreciated by one of skill in the art that a variety of telemetry systems may be employed, such as wired drill pipe, electromagnetic or other known telemetry systems.

Typically, the wellbore is drilled according to a drilling plan that is established prior to drilling. The drilling plan typically sets forth equipment, pressures, trajectories and/or other parameters that define the drilling process for the wellsite. The drilling operation may then be performed according to the drilling plan. However, as information is gathered, the drilling operation may need to deviate from the drilling plan. Additionally, as drilling or other operations are performed, the subsurface conditions may change. The earth model may also need adjustment as new information is collected

The data gathered by sensors (S) may be collected by surface unit 134 and/or other data collection sources for analysis or other processing. The data collected by sensors (S) may be used alone or in combination with other data. The data may be collected in one or more databases and/or transmitted on or offsite. The data may be historical data, real time data, or combinations thereof. The real time data may be used in real time, or stored for later use. The data may also be combined with historical data or other inputs for further analysis. The data may be stored in separate databases, or combined into a single database.

Surface unit 134 may include transceiver 137 to allow communications between surface unit 134 and various portions of the oilfield 100 or other locations. Surface unit 134 may also be provided with or functionally connected to one or more controllers (not shown) for actuating mechanisms at oilfield 100. Surface unit 134 may then send command signals to oilfield 100 in response to data received. Surface unit 134 may receive commands via transceiver 137 or may itself execute commands to the controller. A processor may be provided to analyze the data (locally or remotely), make the decisions and/or actuate the controller. In this manner, oilfield 100 may be selectively adjusted based on the data collected. This technique may be used to optimize (or improve) portions of the field operation, such as controlling drilling, weight on bit, pump rates, or other parameters. These adjustments may be made automatically based on computer protocol, and/or manually by an operator. In some cases, well plans may be adjusted to select optimum (or improved) operating conditions, or to avoid problems.

Figure 1C illustrates a wireline operation being performed by wireline tool 106.3 suspended by rig 128 and into wellbore 136 of Figure 1B. Wireline tool 106.3 is adapted for deployment into wellbore 136 for generating well logs, performing downhole tests and/or collecting samples. Wireline tool 106.3 may be used to provide another method and apparatus for performing a seismic survey operation. Wireline tool 106.3 may, for example, have an explosive, radioactive, electrical, or acoustic energy source 144 that sends and/or receives electrical signals to surrounding subterranean formations 102 and fluids therein.

Wireline tool 106.3 may be operatively connected to, for example, geophones 118 and a computer 122.1 of a seismic truck 106.1 of Figure 1A. Wireline tool 106.3 may also provide data to surface unit 134. Surface unit 134 may collect data generated during the wireline operation and may produce data output 135 that may be stored or transmitted. Wireline tool 106.3 may be positioned at various depths in the wellbore 136 to provide a survey or other information relating to the subterranean formation 102.

Sensors (S), such as gauges, may be positioned about oilfield 100 to collect data relating to various field operations as described previously. As shown, sensor S is positioned in wireline tool 106.3 to measure downhole parameters which relate to, for example porosity, permeability, fluid composition and/or other parameters of the field operation.

Figure 1D illustrates a production operation being performed by production tool 106.4 deployed from a production unit or Christmas tree 129 and into completed wellbore 136 for drawing fluid from the downhole reservoirs into surface facilities 142. The fluid flows from reservoir 104 through perforations in the casing (not shown) and into production tool 106.4 in wellbore 136 and to surface facilities 142 via gathering network 146.

Sensors (S), such as gauges, may be positioned about oilfield 100 to collect data relating to various field operations as described previously. As shown, the sensor (S) may be positioned in production tool 106.4 or associated equipment, such as Christmas tree 129, gathering network 146, surface facility 142, and/or the production facility, to measure fluid parameters, such as fluid composition, flow rates, pressures, temperatures, and/or other parameters of the production operation.

Production may also include injection wells for added recovery. One or more gathering facilities may be operatively connected to one or more of the wellsites for selectively collecting downhole fluids from the wellsite(s).

While Figures 1B-1D illustrate tools used to measure properties of an oilfield, it will be appreciated that the tools may be used in connection with non-oilfield operations, such as gas fields, mines, aquifers, storage or other subterranean facilities. Also, while certain data acquisition tools are depicted, it will be appreciated that various measurement tools capable of sensing parameters, such as seismic two-way travel time, density, resistivity, production rate, etc., of the subterranean formation and/or its geological formations may be used. Various sensors (S) may be located at various positions along the wellbore and/or the monitoring tools to collect and/or monitor the desired data. Other sources of data may also be provided from offsite locations.

The field configurations of Figures 1A-1D are intended to provide a brief description of an example of a field usable with oilfield application frameworks. Part of, or the entirety, of oilfield 100 may be on land, water and/or sea. Also, while a single field measured at a single location is depicted, oilfield applications may be utilized with any combination of one or more oilfields, one or more processing facilities and one or more wellsites.

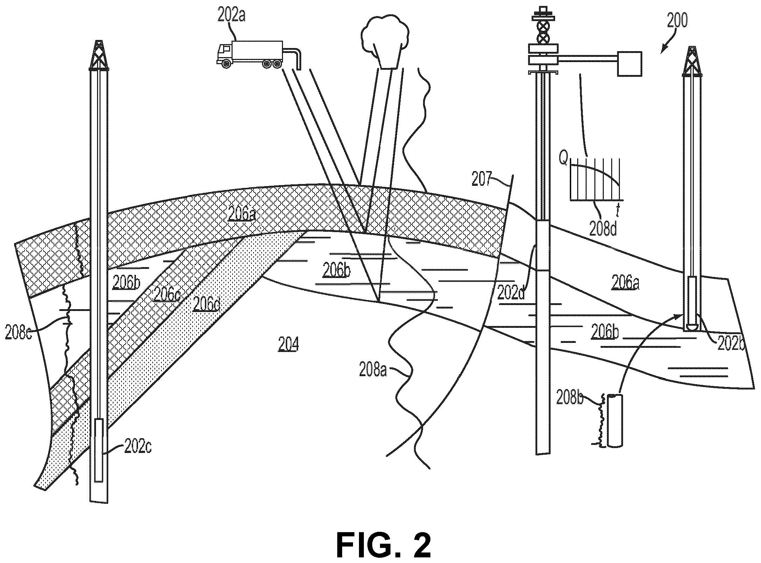

Figure 2 illustrates a schematic view, partially in cross section of oilfield 200 having data acquisition tools 202.1, 202.2, 202.3 and 202.4 positioned at various locations along oilfield 200 for collecting data of subterranean formation 204 in accordance with implementations of various technologies and techniques described herein. Data acquisition tools 202.1-202.4 may be the same as data acquisition tools 106.1-106.4 of Figures 1A-1D, respectively, or others not depicted. As shown, data acquisition tools 202.1-202.4 generate data plots or measurements 208.1-208.4, respectively. These data plots are depicted along oilfield 200 to demonstrate the data generated by the various operations.

Data plots 208.1-208.3 are examples of static data plots that may be generated by data acquisition tools 202.1-202.3, respectively; however, it should be understood that data plots 208.1-208.3 may also be data plots that are updated in real time. These measurements may be analyzed to better define the properties of the formation(s) and/or determine the accuracy of the measurements and/or for checking for errors. The plots of each of the respective measurements may be aligned and scaled for comparison and verification of the properties.

Static data plot 208.1 is a seismic two-way response over a period of time. Static plot 208.2 is core sample data measured from a core sample of the formation 204. The core sample may be used to provide data, such as a graph of the density, porosity, permeability, or some other physical property of the core sample over the length of the core. Tests for density and viscosity may be performed on the fluids in the core at varying pressures and temperatures. Static data plot 208.3 is a logging trace that typically provides a resistivity or other measurement of the formation at various depths.

A production decline curve or graph 208.4 is a dynamic data plot of the fluid flow rate over time. The production decline curve typically provides the production rate as a function of time. As the fluid flows through the wellbore, measurements are taken of fluid properties, such as flow rates, pressures, composition, etc.

Other data may also be collected, such as historical data, user inputs, economic information, and/or other measurement data and other parameters of interest. As described below, the static and dynamic measurements may be analyzed and used to generate models of the subterranean formation to determine characteristics thereof. Similar measurements may also be used to measure changes in formation aspects over time.

The subterranean structure 204 has a plurality of geological formations 206.1-206.4. As shown, this structure has several formations or layers, including a shale layer 206.1, a carbonate layer 206.2, a shale layer 206.3 and a sand layer 206.4. A fault 207 extends through the shale layer 206.1 and the carbonate layer 206.2. The static data acquisition tools are adapted to take measurements and detect characteristics of the formations.

While a specific subterranean formation with specific geological structures is depicted, it will be appreciated that oilfield 200 may contain a variety of geological structures and/or formations, sometimes having extreme complexity. In some locations, typically below the water line, fluid may occupy pore spaces of the formations. Each of the measurement devices may be used to measure properties of the formations and/or its geological features. While each acquisition tool is shown as being in specific locations in oilfield 200, it will be appreciated that one or more types of measurement may be taken at one or more locations across one or more fields or other locations for comparison and/or analysis.

The data collected from various sources, such as the data acquisition tools of Figure 2, may then be processed and/or evaluated. Typically, seismic data displayed in static data plot 208.1 from data acquisition tool 202.1 is used by a geophysicist to determine characteristics of the subterranean formations and features. The core data shown in static plot 208.2 and/or log data from well log 208.3 are typically used by a geologist to determine various characteristics of the subterranean formation. The production data from graph 208.4 is typically used by the reservoir engineer to determine fluid flow reservoir characteristics. The data analyzed by the geologist, geophysicist and the reservoir engineer may be analyzed using modeling techniques.

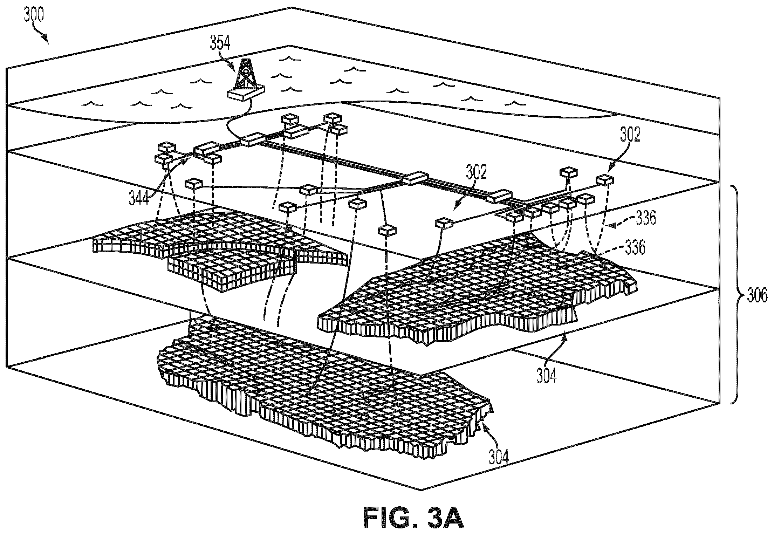

Figure 3A illustrates an oilfield 300 for performing production operations in accordance with implementations of various technologies and techniques described herein. As shown, the oilfield has a plurality of wellsites 302 operatively connected to central processing facility 354. The oilfield configuration of Figure 3A is not intended to limit the scope of the oilfield application system. Part, or all, of the oilfield may be on land and/or sea. Also, while a single oilfield with a single processing facility and a plurality of wellsites is depicted, any combination of one or more oilfields, one or more processing facilities and one or more wellsites may be present.

Each wellsite 302 has equipment that forms wellbore 336 into the earth. The wellbores extend through subterranean formations 306 including reservoirs 304. These reservoirs 304 contain fluids, such as hydrocarbons. The wellsites draw fluid from the reservoirs and pass them to the processing facilities via surface networks 344. The surface networks 344 have tubing and control mechanisms for controlling the flow of fluids from the wellsite to processing facility 354.

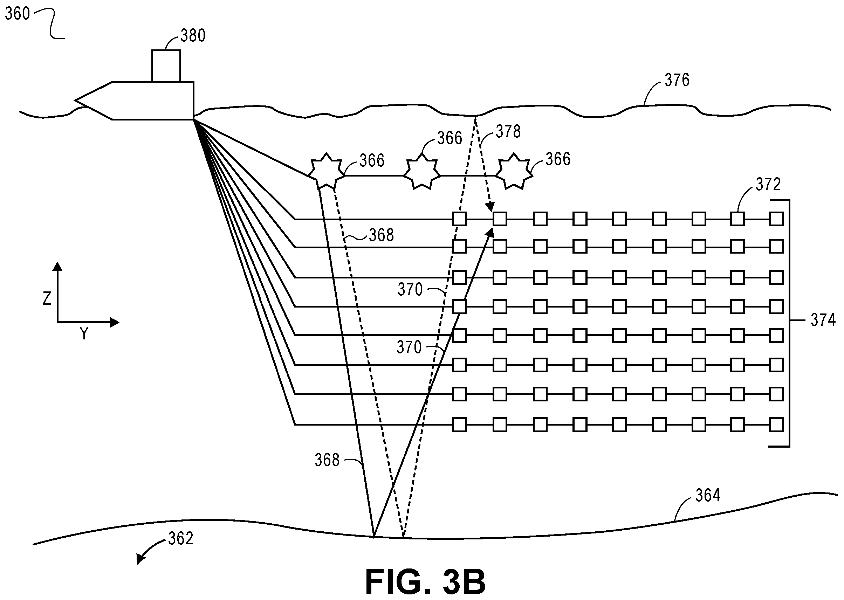

Attention is now directed to Figure 3B, which illustrates a side view of a marine-based survey 360 of a subterranean subsurface 362 in accordance with one or more implementations of various techniques described herein. Subsurface 362 includes seafloor surface 364. Seismic sources 366 may include marine sources such as vibroseis or airguns, which may propagate seismic waves 368 (e.g., energy signals) into the Earth over an extended period of time or at a nearly instantaneous energy provided by impulsive sources. The seismic waves may be propagated by marine sources as a frequency sweep signal. For example, marine sources of the vibroseis type may initially emit a seismic wave at a low frequency (e.g., 5 Hz) and increase the seismic wave to a high frequency (e.g., 80-90Hz) over time.

The component(s) of the seismic waves 368 may be reflected and converted by seafloor surface 364 (i.e., reflector), and seismic wave reflections 370 may be received by a plurality of seismic receivers 372. Seismic receivers 372 may be disposed on a plurality of streamers (i.e., streamer array 374). The seismic receivers 372 may generate electrical signals representative of the received seismic wave reflections 370. The electrical signals may be embedded with information regarding the subsurface 362 and captured as a record of seismic data.

In one implementation, each streamer may include streamer steering devices such as a bird, a deflector, a tail buoy and the like, which are not illustrated in this application. The streamer steering devices may be used to control the position of the streamers in accordance with the techniques described herein.

In one implementation, seismic wave reflections 370 may travel upward and reach the water/air interface at the water surface 376, a portion of reflections 370 may then reflect downward again (i.e., sea-surface ghost waves 378) and be received by the plurality of seismic receivers 372. The sea-surface ghost waves 378 may be referred to as surface multiples. The point on the water surface 376 at which the wave is reflected downward is generally referred to as the downward reflection point.

The electrical signals may be transmitted to a vessel 380 via transmission cables, wireless communication or the like. The vessel 380 may then transmit the electrical signals to a data processing center. Alternatively, the vessel 380 may include an onboard computer capable of processing the electrical signals (i.e., seismic data). Those skilled in the art having the benefit of this disclosure will appreciate that this illustration is highly idealized. For instance, surveys may be of formations deep beneath the surface. The formations may typically include multiple reflectors, some of which may include dipping events, and may generate multiple reflections (including wave conversion) for receipt by the seismic receivers 372. In one implementation, the seismic data may be processed to generate a seismic image of the subsurface 362.

Marine seismic acquisition systems tow each streamer in streamer array 374 at the same depth (e.g., 5-10m). However, marine based survey 360 may tow each streamer in streamer array 374 at different depths such that seismic data may be acquired and processed in a manner that avoids the effects of destructive interference due to sea-surface ghost waves. For instance, marine-based survey 360 of Figure 3B illustrates eight streamers towed by vessel 380 at eight different depths. The depth of each streamer may be controlled and maintained using the birds disposed on each streamer.

### System and Method to Automatically Detect the Scale Type of Well-Log Properties in Raster Images

The system and method described herein may address the challenges described above using unsupervised machine-learning (ML) techniques to automatically detect linear and/or logarithmic scale types of well-log properties. In one embodiment, the system and method may use plot segment images for automatic scale type detection. A denoising module may use one or more ML-based outlier detections when the well-log data (e.g., raster image) is noisy. Once the scale types are detected, the well-log data (e.g., raster image) may then be digitized and used (e.g., as an input) to perform applications such as log interpretation, correlation, and prediction.

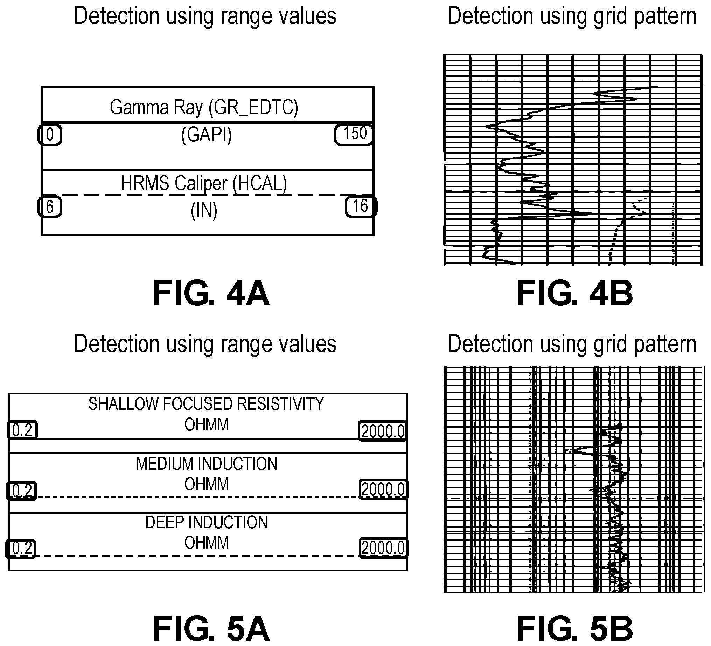

Figure 4A illustrates detection of a linear scale type using range values (e.g., in the boxes) in a log header of a well-log, and Figure 4B illustrates detection of a linear scale type using a grid pattern from a plot segment, according to an embodiment. Linear scale is a scale with equal divisions for equal values (i.e., equidistance gridlines).

Figure 5A illustrates detection of a logarithmic scale type using range values (e.g., in the boxes) in a log header of a well-log, and Figure 5B illustrates detection of a logarithmic scale type using a grid pattern from a plot segment, according to an embodiment. Logarithmic scale is a nonlinear scale with varying distances between gridlines. It is used to plot numerical data over a wide range of values in a compact form. The largest numbers in the data may be hundreds or even thousands of times larger than the smallest numbers.

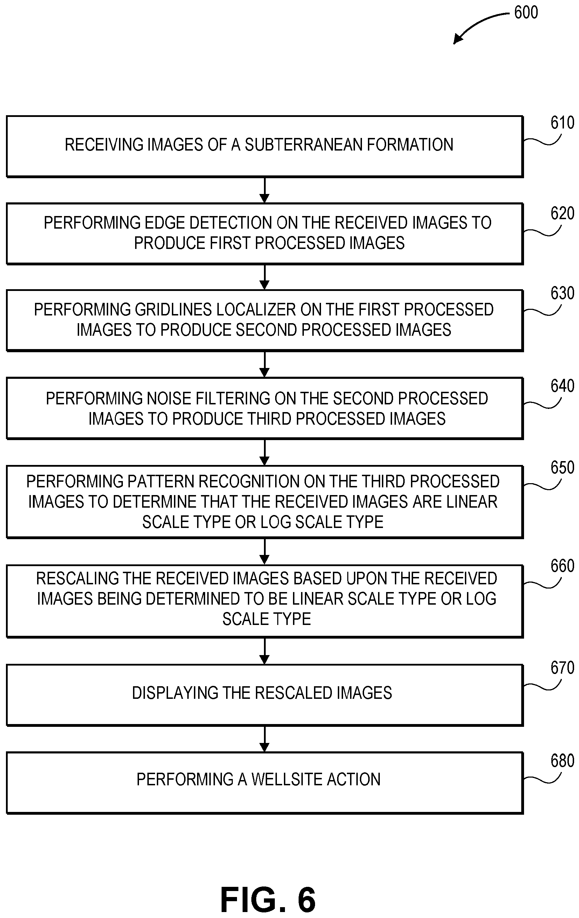

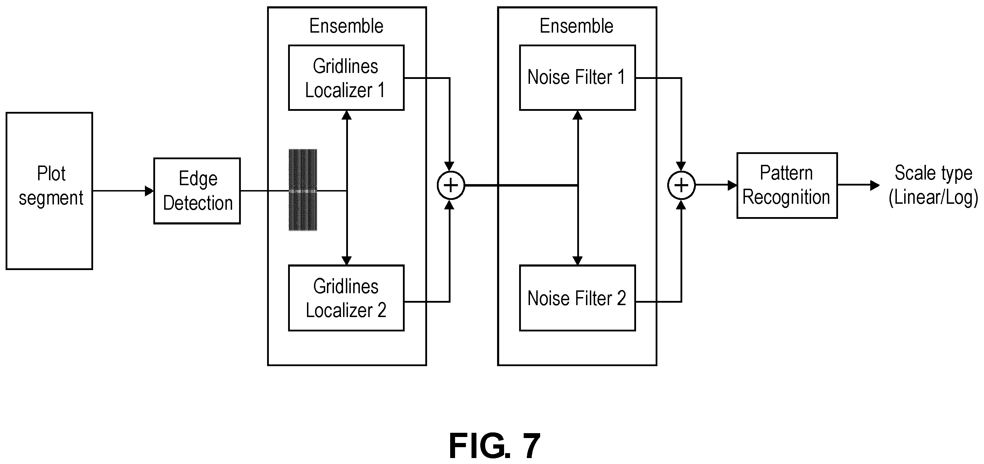

Figure 6 illustrates a flowchart of a method 600 for automatically detecting a scale type of well-log property in a (e.g., raster) image using edge detection, gridlines localizer, noise filters, and/or pattern recognition, according to an embodiment. Figure 7 illustrates a schematic view of the method 600, according to an embodiment. An illustrative order of the method 600 is shown in Figures 6 and 7; however, one or more portions of the method 600 may be performed in a different order, simultaneously, repeated, or omitted.

The method 600 may use an unsupervised ML-based technique to detect the scale type of plot segments corresponding to well logs. More particularly, a pattern from 2D plot segment images can be extracted using edge detection, gridlines localizer, and outlier detectors. Further, the logarithmic and/or linear scale type may be determined using ML-based pattern recognition. The method 600 processes the spacing between the gridlines as a feature to distinguish between the scale types.

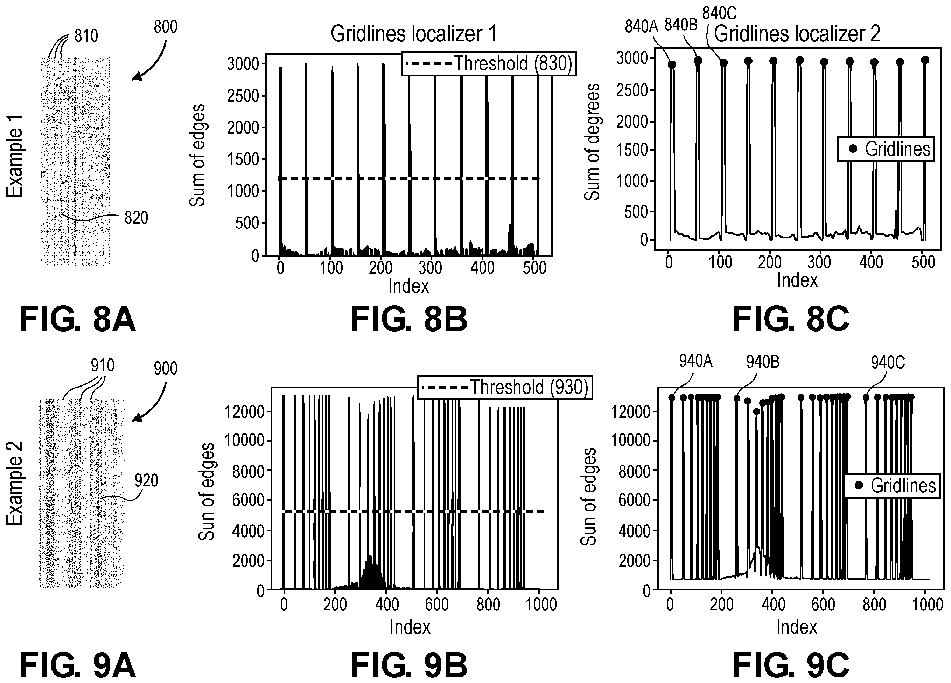

The method 600 may include receiving one or more images of a subterranean formation, as at 610. The images may be or include 2D or 3D plot segment images of the subterranean formation. Figure 8A illustrates an image (e.g., plot segment) 800 of a well-log that uses a linear scale, and Figure 9A illustrates an image (e.g., plot segment) 900 of a well-log that uses a logarithmic scale, according to an embodiment. Each image 800, 900 may include gridlines 810, 910 and one or more curves 820, 920 that represent the measured data (e.g., well-log property). However, at the time that the images 800, 900 are received, the scale type of the images 800, 900 may not be known. Thus, the following portion of the method 600 may help to determine the scale type.

The method 600 may also include performing edge detection on the images 800, 900 to produce a plurality of first processed images, as at 620. Each image 800, 900 and/or corresponding first processed image may include a plurality of columns. Performing the edge detection may include detecting edge pixels in the columns of each of the images 800, 900. The edge pixels may correspond to (or be part of) the gridlines 810, 910, the curves 820, 920, or both. The first processed images may be binary images. The binary images may include the edge pixels and a background.

The method 600 may also include performing gridlines localizer on the first processed images to produce a plurality of second processed images, as at 630. Performing the gridlines localizer may include determining a sum of the edge pixels in each column of the first processed images. Performing the gridlines localizer may also include identifying a first portion of the columns having sums that exceed a first (e.g., global) threshold. The global threshold is a predetermined fraction of a maximum of all of the sums. The predetermined fraction may be, for example, 20%, 30%, 40%, 50%, 60%, or the like. Performing the gridlines localizer may also include identifying a second portion of the columns having sums that exceed a second (e.g., local) threshold. The local threshold is a second predetermined fraction of a maximum of the sums corresponding to a subset of the columns that are spatially consecutive. The subset is one of a plurality of subsets that are non-overlapping. The predetermined fraction may be, for example, 20%, 30%, 40%, 50%, 60%, or the like.

Figure 8B illustrates a gridlines localizer determining a sum of the edge pixels in each column of the plot segment of Figure 8A, and Figure 9B illustrates a gridlines localizer determining a sum of the edge pixels in each column of the plot segment of Figure 9A, according to an embodiment. Reference numbers 830, 930 represent a threshold (e.g., the global threshold, the local threshold, or a combination thereof). Performing the gridlines localizer may also include determining that the first and second portions of the columns represent peaks. In other words, some of the columns/sums are greater than the threshold(s) 830, 930, and some of the columns/sums are not. The peaks represent the tops of the columns/sums that are greater than the threshold(s) 830, 930. Figure 8C identifies the peaks 840A-840C from Figure 8B, and Figure 9C identifies the peaks 940A-940C from Figure 9B.

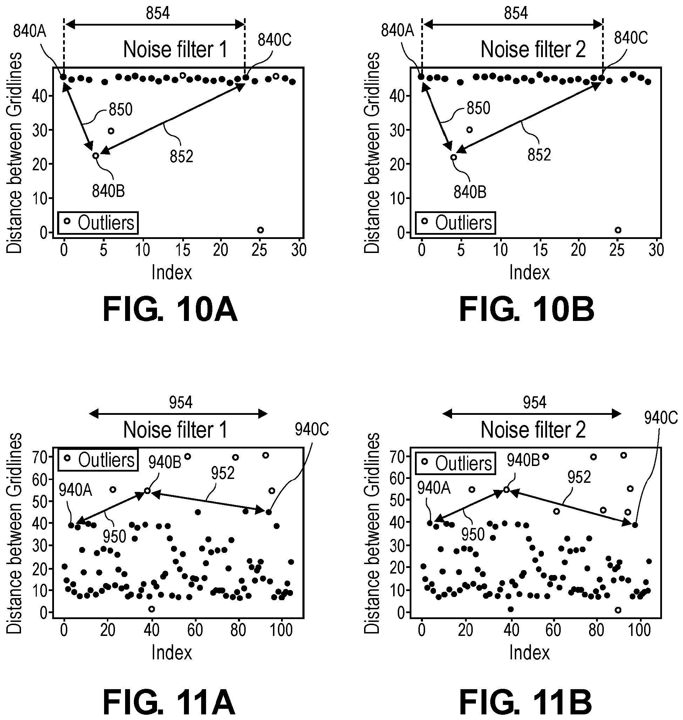

The method 600 may also include performing noise filtering on the second processed images to produce a plurality of third processed images, as at 640. Performing noise filtering may include determining distances between the peaks 840A-840C (or distances between the peaks 940A-940C). Determining the distances may include determining first distances between each pair of consecutive peaks 840A-840C (or peaks 940A-940C). In the example shown in Figures 10A and 10B, this may include determining the distance 850 between peaks 840A, 840B and determining the distance 852 between peaks 840B, 840C. In the example shown in Figures 11A and 11B, this may include determining the distance 950 between peaks 940A, 940B and determining the distance 952 between peaks 940B, 940C. Determining the distances may also or instead include determining second distances between each pair of alternating peaks. Each pair of peaks may include one or more peaks therebetween. For example, this may include determining the distance 854 (or 954) between peaks 840A, 840C (or peaks 940A, 940C).

Performing noise filtering may also include identifying one or more of the peaks (e.g., peaks 840B, 940B) as outliers based upon the distances 850, 852, 854. Figures 10A and 10B illustrate noise filters identifying the peaks 840B of the columns from a linear scale well-log that are noisy/outliers and the peaks 840A, 840C of the columns that are noise-free/inliers, and Figures 11A and 11B illustrate noise filters identifying the peaks 940B of the columns from a logarithmic scale well-log that are noisy/outliers and the peaks 940A, 940C of the columns that are noise-free/inliers, according to an embodiment. The one or more peaks 840B, 940B may be identified as outliers based upon one or more of the distances 850, 852, 854, 950, 952, 954 being greater than a first predetermined distance threshold. Performing noise filtering may also include removing the one or more peaks 840B, 940B that are identified as the outliers to produce the plurality of third processed images.

Said another way, detected gridline locations may be false when the input rasters and/or plot segments have noise that is greater than a predetermined noise threshold. **In** addition, the detected gridline locations may be false when the plot segments with curves run parallel to the gridlines. These gridline locations may be discarded, as they may not represent the true gridlines. A noise-filtering algorithm based on the distance between successive gridlines may be used to detect and/or discard the noisy samples (e.g., gridline locations). To improve the performance of the noise filtering, the distances between consecutive two, three, etc. gridlines may be determined, and the gridlines may then be normalized based upon these distances. The noise filter(s) may also boost the model performance.

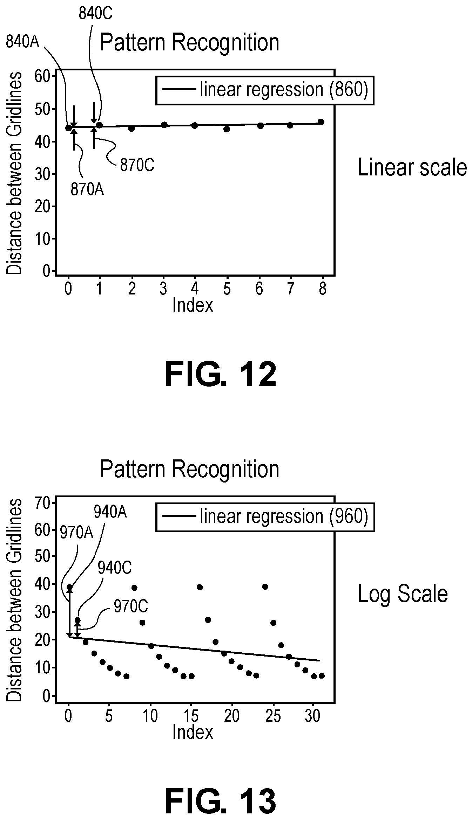

The method 600 may also include performing pattern recognition on the third processed images, as at 650. Figure 12 illustrates a pattern recognition being performed on a linear scale well-log after the noise filters remove the noisy/outlier peaks 840B, and Figure 13 illustrates a pattern recognition being performed on a logarithmic scale well-log after the noise filters remove the noisy/outlier peaks 940B, according to an embodiment. Performing pattern recognition may include fitting a (e.g., straight) line 860, 960 based upon (e.g., that best fits) the peaks 840A, 840C, 940A, 940C in the third processed images. Performing pattern recognition may also include determining distances 870A, 870C, 970A, 970C between the peaks 840A, 840C, 940A, 940C and the straight line 860, 960.

Performing pattern recognition may also include determining that the received images 800, 900 that correspond to the third processed images are linear scale type or logarithmic scale type based upon the distances 870A, 870C, 970A, 970C between the peaks 840A, 840C, 940A, 940C and the straight line 860, 960. The images are determined to be linear scale type based upon one or more (or an average or the aggregate) of the distances 870A, 870C, 970A, 970C being less than a second predetermined distance threshold. The images are determined to be logarithmic scale type based upon one or more (or an average or the aggregate) of the distances 870A, 870C, 970A, 970C being greater than the second predetermined distance threshold.

Said another way, once the outliers are removed, the refined array of distance between the successive gridlines may be used as a feature to identify the pattern of gridlines locations. A regression technique may be used to fit a straight line passing through points of this array, and the mean distance may be determined based upon the fitted line. Smaller values of mean distance correspond to linear scale, and larger values of mean distance correspond to logarithmic scale.

The method 600 may also include rescaling the received 800, 900 images (from 610) based upon the received images 800, 900 being determined to be linear scale type or logarithmic scale type, as at 660.

The method 600 may also include displaying the rescaled images, as at 670. This may also or instead include displaying the first processed images, the second processed images, the third processed images, or a combination thereof.

The method 600 may also include performing a wellsite action, as at 680. The wellsite action may be performed based upon the determined scale type, the rescaled images, or both. The wellsite action may be or include generating and/or transmitting a signal (e.g., using a computing system) that causes a physical action to occur at a wellsite. The wellsite action may also or instead include performing the physical action at the wellsite. The physical action may be or include varying a weight and/or torque on a drill bit, varying a drilling trajectory, varying a concentration and/or flow rate of a fluid pumped into a wellbore, or the like.

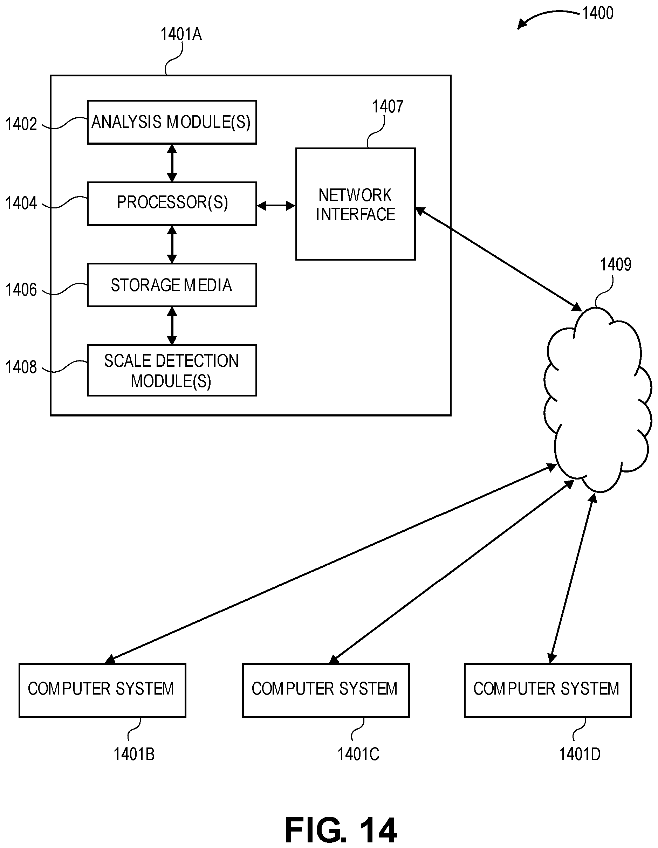

In some embodiments, any of the methods of the present disclosure may be executed by a computing system. Figure 14 illustrates an example of such a computing system 1400, in accordance with some embodiments. The computing system 1400 may include a computer or computer system 1401A, which may be an individual computer system 1401A or an arrangement of distributed computer systems. The computer system 1401A includes one or more analysis module(s) 1402 configured to perform various tasks according to some embodiments, such as one or more methods disclosed herein. To perform these various tasks, the analysis module 1402 executes independently, or in coordination with, one or more processors 1404, which is (or are) connected to one or more storage media 1406. The processor(s) 1404 is (or are) also connected to a network interface 1407 to allow the computer system 1401A to communicate over a data network 1409 with one or more additional computer systems and/or computing systems, such as 1401B, 1401C, and/or 1401D (note that computer systems 1401B, 1401C and/or 1401D may or may not share the same architecture as computer system 1401A, and may be located in different physical locations, e.g., computer systems 1401A and 1401B may be located in a processing facility, while in communication with one or more computer systems such as 1401C and/or 1401D that are located in one or more data centers, and/or located in varying countries on different continents).

A processor can include a microprocessor, microcontroller, processor module or subsystem, programmable integrated circuit, programmable gate array, or another control or computing device.

The storage media 1406 can be implemented as one or more computer-readable or machine-readable storage media. Note that while in the example embodiment of Figure 14 storage media 1406 is depicted as within computer system 1401A, in some embodiments, storage media 1406 may be distributed within and/or across multiple internal and/or external enclosures of computing system 1401A and/or additional computing systems. Storage media 1406 may include one or more different forms of memory including semiconductor memory devices such as dynamic or static random access memories (DRAMs or SRAMs), erasable and programmable read-only memories (EPROMs), electrically erasable and programmable read-only memories (EEPROMs) and flash memories, magnetic disks such as fixed, floppy and removable disks, other magnetic media including tape, optical media such as compact disks (CDs) or digital video disks (DVDs), BLURAY^{®} disks, or other types of optical storage, or other types of storage devices. Note that the instructions discussed above can be provided on one computer-readable or machine-readable storage medium, or alternatively, can be provided on multiple computer-readable or machine-readable storage media distributed in a large system having possibly plural nodes. Such computer-readable or machine-readable storage medium or media is (are) considered to be part of an article (or article of manufacture). An article or article of manufacture can refer to any manufactured single component or multiple components. The storage medium or media can be located either in the machine running the machine-readable instructions, or located at a remote site from which machine-readable instructions can be downloaded over a network for execution.

In some embodiments, computing system 1400 contains one or more scale detection module(s) 1408 that may perform at least a portion of one or more of the method(s) described above. It should be appreciated that computing system 1400 is only one example of a computing system, and that computing system 1400 may have more or fewer components than shown, may combine additional components not depicted in the example embodiment of Figure 14, and/or computing system 1400 may have a different configuration or arrangement of the components depicted in Figure 14. The various components shown in Figure 14 may be implemented in hardware, software, or a combination of both hardware and software, including one or more signal processing and/or application specific integrated circuits.

Further, the steps in the processing methods described herein may be implemented by running one or more functional modules in information processing apparatus such as general purpose processors or application specific chips, such as ASICs, FPGAs, PLDs, or other appropriate devices. These modules, combinations of these modules, and/or their combination with general hardware are all included within the scope of protection of the invention.

Geologic interpretations, models and/or other interpretation aids may be refined in an iterative fashion; this concept is applicable to embodiments of the present methods discussed herein. This can include use of feedback loops executed on an algorithmic basis, such as at a computing device (e.g., computing system 1400, Figure 14), and/or through manual control by a user who may make determinations regarding whether a given step, action, template, model, or set of curves has become sufficiently accurate for the evaluation of the subterranean three-dimensional geologic formation under consideration.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. Moreover, the order in which the elements of the methods are illustrated and described may be re-arranged, and/or two or more elements may occur simultaneously. The embodiments were chosen and described in order to best explain the principles of the invention and its practical applications, to thereby enable others skilled in the art to best utilize the invention and various embodiments with various modifications as are suited to the particular use contemplated.

## Claims

1. A method for processing an image of a subterranean formation, the method comprising:
performing edge detection on the image to produce a first processed image;
performing gridlines localizer on the first processed image to produce a second processed image;
performing noise filtering on the second processed image to produce a third processed image; and
performing pattern recognition on the third processed image to determine that the image that corresponds to the third processed image is linear scale type or logarithmic scale type,
wherein the image preferably comprises a 2D plot segment image of the subterranean formation.

2. The method of claim 1, wherein performing edge detection comprises detecting edge pixels in the image, and wherein the edge pixels correspond to gridlines, curves, or both in the image.

3. The method of claim 1 or 2, wherein performing the gridlines localizer comprises:
determining a sum of edge pixels in each column of the first processed image;
identifying the columns having sums that exceed a threshold; and
determining that the identified columns comprise peaks.

4. The method of claim 3, wherein identifying the columns comprises:
identifying a first portion of the columns having sums that exceed a global threshold, wherein the global threshold is a first predetermined fraction of a maximum of all of the sums; and
identifying a second portion of the columns having sums that exceed a local threshold, wherein the local threshold is a second predetermined fraction of a maximum of the sums corresponding to a subset of the columns that are spatially consecutive, wherein the subset is one of a plurality of subsets that are non-overlapping.

5. The method of claim 4, wherein the global threshold is greater than the local threshold.

6. The method of claim 3, 4 or 5, wherein performing the noise filtering comprises:
determining distances between the peaks;
identifying one or more of the peaks as outliers based upon the distances, wherein the one or more peaks are identified as outliers based upon one or more of the distances being greater than a first predetermined distance threshold; and
removing the one or more peaks that are identified as the outliers to produce the third processed image.

7. The method of claim 6, wherein determining the distances between the peaks comprises:
determining first distances between each pair of consecutive peaks; and
determining second distances between each pair of alternating peaks.

8. The method of any one of claims 3 to 7, wherein performing the pattern recognition comprises:
fitting a straight line through the peaks in the third processed image;
determining distances between the peaks and the straight line; and
determining that the image that corresponds to the third processed image is linear scale type or logarithmic scale type based upon the distances between the peaks and the straight line.

9. The method of claim 8,
wherein the image is determined to be linear scale type based upon an average of the distances between the peaks and the straight line being less than a second predetermined distance threshold, and/or
wherein the images are determined to be logarithmic scale type based upon an average of the distances between the peaks and the straight line being greater than a second predetermined distance threshold.

10. The method of any one of the preceding claims, further comprising rescaling the image to produce a rescaled image, wherein the image is rescaled based upon the image being determined to be linear scale type or logarithmic scale type.

11. The method of any one of the preceding claims, further comprising performing a wellsite action in response to the image being determined to be linear scale type or logarithmic scale type.

12. The method of claim 11, wherein the wellsite action comprises generating and transmitting a signal that causes a physical action to occur at a wellsite, wherein the physical action comprises varying a weight on a drill bit, varying a torque on the drill bit, varying a drilling trajectory, varying a concentration of a fluid pumped into a wellbore, varying a flow rate of the fluid pumped into the wellbore, or a combination thereof.

13. The method of any one of the preceding claims,
wherein the method comprises receiving the image,
wherein the first processed image is a binary image, and wherein the binary image comprises the edge pixels and a background, and
wherein the method comprises displaying a rescaled image.

14. A computing system, comprising:
one or more processors; and
a memory system comprising one or more non-transitory computer-readable media storing instructions that, when executed by at least one of the one or more processors, cause the computing system to perform a methodf according to any one of the preceding claims.

15. A computer program comprising instructions that, when executed by a computer processor of a computing device, causes the computing device to perform a method according to any one of claims 1 to 13.

## Patentansprüche

1. Verfahren zum Verarbeiten eines Bildes einer unterirdischen Formation, das Verfahren umfassend:
Durchführen einer Kantenerkennung an dem Bild, um ein erstes verarbeitetes Bild zu erzeugen;
Durchführen eines Gitterlinien-Lokalisierers auf dem ersten verarbeiteten Bild, um ein zweites verarbeitetes Bild zu erzeugen;
Durchführen einer Rauschfilterung an dem zweiten verarbeiteten Bild, um ein drittes verarbeitetes Bild zu erzeugen; und
Durchführen einer Mustererkennung an dem dritten verarbeiteten Bild, um zu bestimmen, dass das Bild, das dem dritten verarbeiteten Bild entspricht, vom linearen Skalentyp oder vom logarithmischen Skalentyp ist,
wobei das Bild vorzugsweise ein 2D-Plotsegmentbild der unterirdischen Formation umfasst.

2. Verfahren nach Anspruch 1, wobei das Durchführen einer Kantenerkennung Erkennen von Kantenpixeln in dem Bild umfasst, und wobei die Kantenpixel Gitterlinien, Kurven oder beidem in dem Bild entsprechen.

3. Verfahren nach Anspruch 1 oder 2, wobei das Durchführen des Gitterlinien-Lokalisierers umfasst:
Bestimmen einer Summe von Kantenpixeln in jeder Spalte des ersten verarbeiteten Bildes;
Identifizieren der Spalten mit Summen, die einen Schwellenwert überschreiten; und
Bestimmen, dass die identifizierten Spalten Peaks umfassen.

4. Verfahren nach Anspruch 3, wobei das Identifizieren der Spalten umfasst:
Identifizieren eines ersten Abschnitts der Spalten mit Summen, die einen globalen Schwellenwert überschreiten, wobei der globale Schwellenwert ein erster vorbestimmter Bruchteil eines Maximums aller Summen ist; und
Identifizieren eines zweiten Abschnitts der Spalten mit Summen, die einen lokalen Schwellenwert überschreiten, wobei der lokale Schwellenwert ein zweiter vorbestimmter Bruchteil eines Maximums der Summen ist, die einem Teilsatz der Spalten entsprechen, die räumlich aufeinanderfolgend sind, wobei der Teilsatz einer aus einer Vielzahl von Teilsätzen ist, die sich nicht überlappen.

5. Verfahren nach Anspruch 4, wobei der globale Schwellenwert größer als der lokale Schwellenwert ist.

6. Verfahren nach Anspruch 3, 4 oder 5, wobei das Durchführen der Rauschfilterung umfasst:
Bestimmen von Abständen zwischen den Peaks;
Identifizieren eines oder mehrerer der Peaks als Ausreißer basierend auf den Abständen, wobei der eine oder die mehreren Peaks als Ausreißer identifiziert werden, basierend darauf, dass einer oder mehrere der Abstände größer als ein erster vorbestimmter Abstandsschwellenwert sind; und
Entfernen des einen oder der mehreren Peaks, die als die Ausreißer identifiziert sind, um das dritte verarbeitete Bild zu erzeugen.

7. Verfahren nach Anspruch 6, wobei das Bestimmen der Abstände zwischen den Peaks umfasst:
Bestimmen erster Abstände zwischen jedem Paar aufeinanderfolgender Peaks; und
Bestimmen zweiter Abstände zwischen jedem Paar alternierender Peaks.

8. Verfahren nach einem der Ansprüche 3 bis 7, wobei das Durchführen der Mustererkennung umfasst:
Anpassen einer geraden Linie durch die Peaks in dem dritten verarbeiteten Bild;
Bestimmen von Abständen zwischen den Peaks und der geraden Linie; und
Bestimmen, dass das Bild, das dem dritten verarbeiteten Bild entspricht, vom linearen Skalentyp oder vom logarithmischen Skalentyp ist, basierend auf den Abständen zwischen den Peaks und der geraden Linie.

9. Verfahren nach Anspruch 8,
wobei bestimmt wird, dass das Bild vom linearen Skalentyp ist, basierend darauf, dass ein Durchschnitt der Abstände zwischen den Peaks und der geraden Linie geringer ist als ein zweiter vorbestimmter Abstandsschwellenwert, und/oder
wobei bestimmt wird, dass die Bilder vom logarithmischen Skalentyp sind, basierend darauf, dass ein Durchschnitt der Abstände zwischen den Peaks und der geraden Linie größer als ein zweiter vorbestimmter Abstandsschwellenwert ist.

10. Verfahren nach einem der vorstehenden Ansprüche, ferner umfassend Neuskalieren des Bildes zum Erzeugen eines neuskalierten Bildes, wobei das Bild basierend darauf neuskaliert wird, dass bestimmt wird, dass das Bild vom linearen Skalentyp oder logarithmischen Skalentyp ist.

11. Verfahren nach einem der vorstehenden Ansprüche, ferner umfassend Durchführen einer Bohrstellenaktion als Reaktion darauf, dass bestimmt wird, dass das Bild vom linearen Skalentyp oder logarithmischen Skalentyp ist.

12. Verfahren nach Anspruch 11, wobei die Bohrstellenaktion Erzeugen und Übertragen eines Signals umfasst, das bewirkt, dass eine physische Aktion an einer Bohrstelle auftritt, wobei die physische Aktion Variieren eines Gewichts auf einem Bohrmeißel, Variieren eines Drehmoments auf dem Bohrmeißel, Variieren einer Bohrbahn, Variieren einer Konzentration eines in eine Bohrung gepumpten Fluids, Variieren einer Strömungsgeschwindigkeit des in die Bohrung gepumpten Fluids oder eine Kombination davon umfasst.

13. Verfahren nach einem der vorstehenden Ansprüche,
wobei das Verfahren Empfangen des Bildes umfasst,
wobei das erste verarbeitete Bild ein Binärbild ist, und wobei das Binärbild die Kantenpixel und einen Hintergrund umfasst, und
wobei das Verfahren Anzeigen eines neu skalierten Bildes umfasst.

14. Rechensystem, umfassend:
einen oder mehrere Prozessoren; und
ein Speichersystem, umfassend ein oder mehrere nichtflüchtige computerlesbare Medien, die Anweisungen speichern, die, wenn sie durch mindestens eines des einen oder der mehreren Prozessoren ausgeführt werden, das Computersystem veranlassen, ein Verfahren nach einem der vorstehenden Ansprüche durchzuführen.

15. Computerprogramm, das Anweisungen umfasst, die, wenn sie von einem Computerprozessor einer Rechenvorrichtung ausgeführt werden, die Rechenvorrichtung veranlassen, ein Verfahren nach einem der Ansprüche 1 bis 13 durchzuführen.

## Revendications

1. Procédé de traitement d'une image d'une formation souterraine, le procédé comprenant :
la réalisation d'une détection de contour sur l'image afin de générer une première image traitée ;
l'exécution d'un localisateur de lignes de quadrillage sur la première image traitée afin de générer une deuxième image traitée ;
la réalisation d'un filtrage de bruit sur la deuxième image traitée afin de générer une troisième image traitée ; et
la réalisation d'une reconnaissance de formes sur la troisième image traitée afin de déterminer que l'image qui correspond à la troisième image traitée est de type échelle linéaire ou de type échelle logarithmique,
dans lequel l'image comprend de préférence une image de segment de tracé 2D de la formation souterraine.

2. Procédé selon la revendication 1, dans lequel la réalisation d'une détection de contour comprend la détection des pixels de contour dans l'image, et dans lequel les pixels de contour correspondent à des lignes de quadrillage, des courbes ou les deux dans l'image.

3. Procédé selon la revendication 1 ou 2, dans lequel l'exécution du localisateur de lignes de quadrillage comprend :
la détermination d'une somme de pixels de contour dans chaque colonne de la première image traitée ;
l'identification des colonnes ayant des sommes qui dépassent un seuil ; et
la détermination du fait que les colonnes identifiées comprennent des pics.

4. Procédé selon la revendication 3, dans lequel l'identification des colonnes comprend :
l'identification d'une première partie des colonnes ayant des sommes qui dépassent un seuil global, dans lequel le seuil global est une première fraction prédéterminée d'un maximum de toutes les sommes ; et
l'identification d'une seconde partie des colonnes ayant des sommes qui dépassent un seuil local, dans lequel le seuil local est une seconde fraction prédéterminée d'un maximum des sommes correspondant à un sous-ensemble des colonnes qui sont spatialement consécutives, dans lequel le sous-ensemble est l'un d'une pluralité de sous-ensembles qui ne se chevauchent pas.

5. Procédé selon la revendication 4, dans lequel le seuil global est supérieur au seuil local.

6. Procédé selon la revendication 3, 4 ou 5, dans lequel la réalisation du filtrage de bruit comprend :
la détermination de distances entre les pics ;
l'identification de l'un ou plusieurs des pics comme valeurs aberrantes sur la base des distances, dans lequel le ou les pics sont identifiés comme valeurs aberrantes sur la base de l'une ou plusieurs des distances qui sont supérieures à un premier seuil de distance prédéterminé ; et
l'élimination du ou des pics qui sont identifiés comme valeurs aberrantes afin de générer la troisième image traitée.

7. Procédé selon la revendication 6, dans lequel la détermination des distances entre les pics comprend :
la détermination de premières distances entre chaque paire de pics consécutifs ; et
la détermination de secondes distances entre chaque paire de pics alternés.

8. Procédé selon l'une quelconque des revendications 3 à 7, dans lequel la réalisation de la reconnaissance de formes comprend :
l'ajustement d'une ligne droite à travers les pics dans la troisième image traitée ;
la détermination de distances entre les pics et la ligne droite ; et
la détermination du fait que l'image qui correspond à la troisième image traitée est de type échelle linéaire ou de type échelle logarithmique sur la base des distances entre les pics et la ligne droite.

9. Procédé selon la revendication 8,
dans lequel l'image est déterminée comme étant de type échelle linéaire sur la base d'une moyenne des distances entre les pics et la ligne droite qui est inférieure à un second seuil de distance prédéterminé, et/ou
dans lequel les images sont déterminées comme étant de type échelle logarithmique sur la base d'une moyenne des distances entre les pics et la ligne droite qui est supérieure à un second seuil de distance prédéterminé.

10. Procédé selon l'une quelconque des revendications précédentes, comprenant en outre le redimensionnement de l'image afin de générer une image redimensionnée, dans lequel l'image est redimensionnée sur la base de l'image qui est déterminée comme étant de type échelle linéaire ou de type échelle logarithmique.

11. Procédé selon l'une quelconque des revendications précédentes, comprenant en outre la réalisation d'une action d'emplacement de puits en réponse à l'image qui est déterminée comme étant de type échelle linéaire ou de type échelle logarithmique.

12. Procédé selon la revendication 11, dans lequel l'action d'emplacement de puits comprend la génération et la transmission d'un signal qui amène une action physique à se produire au niveau d'un emplacement de puits, dans lequel l'action physique comprend la variation d'un poids sur un trépan, la variation d'un couple sur le trépan, la variation d'une trajectoire de forage, la variation d'une concentration d'un fluide pompé dans un puits de forage, la variation d'un débit du fluide pompé dans le puits de forage, ou une combinaison de celles-ci.

13. Procédé selon l'une quelconque des revendications précédentes,
dans lequel le procédé comprend la réception de l'image,
dans lequel la première image traitée est une image binaire, et dans lequel l'image binaire comprend les pixels de contour et un fond, et
dans lequel le procédé comprend l'affichage d'une image redimensionnée.

14. Système informatique, comprenant :
un ou plusieurs processeurs ; et
un système de mémoire comprenant un ou plusieurs supports lisibles par ordinateur non transitoires stockant des instructions qui, lorsqu'elles sont exécutées par au moins l'un du ou des processeurs, amènent le système informatique à effectuer un procédé selon l'une quelconque des revendications précédentes.

15. Programme informatique comprenant des instructions qui, lorsqu'elles sont exécutées par un processeur informatique d'un dispositif informatique, amènent le dispositif informatique à effectuer un procédé selon l'une quelconque des revendications 1 à 13.
